# EUROPEAN PATENT APPLICATION

(11) **EP 2 790 289 A1**
(43) Date of publication of application: **15.10.2014**
(21) Application number: 12855812.9
(22) Date of filing: 31.10.2012
(51) Int. Cl.: H02J 7/00

(54) **PORTABLE BACKUP POWER SUPPLY**

(30) Priority: 09.12.2011 CN 201110409190
(71) Applicant: Lei, Xingliang, Shenzhen, Guangdong 518100 (CN)
(72) Inventor: Lei, Xingliang, Shenzhen, Guangdong 518100 (CN)
(74) Representative: Hryszkiewicz, Danuta
(86) International application number: PCT/CN2012/083793
(87) International publication number: WO 2013/082982

(57) **Abstract**

A portable backup power supply comprises a battery pack (1), which is composed of lithium iron phosphate or lithium cobalt oxide batteries and is connected with an output terminal of a charger circuit (2). The battery pack (1) is synchronously connected with multiple DC-DC voltage regulating circuits, each of which is connected with a MCU microcomputer control circuit (7). A light emitting diode (LED) lamp (10) is connected with the battery pack through an LED driving circuit (3). The battery pack (1) is also connected with a large current output circuit (9) for car starting. By using the lithium iron phosphate or lithium cobalt oxides batteries as the battery pack, the power supply has advantages of being light in weight, small in volume, durable, high in instantaneous discharge current, and capable of being charged repeatedly, hence, it can meet the requirement of large current for car starting. By connecting with the voltage regulating circuits with various voltage levels, the power supply can meet the requirement of outdoor power supplying for mobile phones, computers, digital cameras, and so on. The LED lamp can provide outdoor lighting. The portable backup power supply is multi-purpose, portable, and can meet various requirements of power supplying in life, outing, and traveling.

## Description

The invention relates to a DC power supply, and particularly to a portable backup power supply for supplying direct current for different kinds of device.

Along with rising of the living standards, automobile, mobile devices including cellphone, laptop, and digital camera are normally necessities for living, tripping, or travelling. These mobile devices require batteries supplying power. Once the batteries have ran out, the mobile devices could not work, which causes the user much inconveniency. Therefore, the maker of a mobile device will provide an associated electric power converter for the device to convert the 220 V commercial power to a DC current power having an applicable voltage to charge the battery. Nevertheless, the associated electric power converter could not charge the device in outdoor.

CN 101009434A recites a portable mobile power supply comprising an elongated casing, a groove axially disposed in the casing, a couple of electricity contact points disposed in the groove which are corresponding respectively to a positive electrode and a negative electrode for contacting with the electrodes of the charged battery, a DC-DC boost circuit disposed on the first circuit board and inside the casing for boosting the low output voltage of the charged battery to a 5 V DC current source, and a USB interface disposed in a front end of the casing (the USB interface and the groove are axially arranged in the casing, and the USB interface has a pin electrically connected to the first circuit board for obtaining the 5 V DC current source output by the boost circuit to supply current source for a device connected to the USB interface). The portable mobile power supply in CN 101009434A has the advantages of versatile usages, convenient carrying, and low cost. However, the portable mobile power supply in CN 101009434A does not have a function for charging the portable mobile power supply itself, and is not able to be used to charge various types of electrical equipment since it only supplies a 5 V DC current source.

In addition, CN 101685974A recites a mobile power supply comprising a battery pack, a charging circuit, a MCU (micro control unit) circuit, and a DC-DC voltage regulating circuit. The charging circuit comprises an input terminal connectable to an external current source and an output terminal connected to the battery pack. The battery pack is electrically connected to the MCU circuit and also the DC-DC voltage regulating circuit. The MCU circuit is electrically connected to and controls the DC-DC voltage regulating circuit. The mobile power supply in CN 101685974A is able to charge itself by using the commercial power and is able to charge or supply power for various types of electrical equipment by changing the output converter. Therefore, it is convenient for managing, carrying, and using the mobile power supply in CN 101685974A. However, the mobile power supply in CN 101685974A does not have the ability to output a large current and correspondingly is not able to use as a start-up power source for the automobile.

In view of the above described problem, it is one objective of the invention to provide a portable backup power supply which has the function of charging itself, is able to provide DC-current outputs in various-level voltages, and is able to output a large current source as the start-up source of the automobile.

In order to realize the above objective, the following technical schemes are taken in this invention.

The portable backup power supply comprises a battery pack; the battery pack is composed of lithium iron phosphate batteries and lithium cobalt oxide batteries; the battery pack is connected to the output end of a charging circuit; the battery pack is synchronously connected with multiple DC-DC voltage regulating circuits; each of the multiple DC-DC voltage regulating circuits is connected with the MCU circuit; a LED lamp is connected with the battery pack via a LED driving circuit; and the battery pack is also connected with an a large-current output circuit for car starting.

Preferably, the multiple DC-DC voltage regulating circuits comprise a DC-DC 19 V-output boost circuit, a 12 V output circuit, and a DC-DC 5 V-output buck circuit;

Preferably, the large-current output circuit for car starting outputs a 12 V DC voltage and an instantaneous 100 A - 400 A current.

Preferably, the battery pack is connected with a charge-discharge protection circuit.

Preferably, the MCU circuit is connected with an intelligent LED battery indicator for indicating the power storage of the battery pack.

Preferably, the large-current output circuit for car starting is connected in series with a 150 A - 250 A fuse for the purpose of reducing the possibility of short circuit due to the connection between two connecting clamps of the car battery in the process of car starting. The output terminals of the large-current output circuit adopt a reverse connection-proof plug, and the external positive and negative connecting wires for the output terminals are two silica-gel wires in indifferent lengths. The lithium iron phosphate battery or lithium cobalt oxide battery is designed to have a high power output, and the charge-discharge rate of the battery is 20 c - 70 c.

The 150 A - 250 A fuse is connected to the external positive connecting wire or the external negative connecting wire of the large-current output circuit.

Since the battery pack is composed of lithium iron phosphate batteries or lithium cobalt oxide batteries that possesses the characteristics of light weight, small volume, durability, high instantaneous current, and high repeatability in charging, the portable backup power supply of the invention is capable of providing large start-up current for an automobile. Since multiple DC-DC voltage regulating circuits outputting different voltages are connected to the battery pack, by controlling the MCU circuit, the portable backup power supply is able to supply power for different types of electrical instruments including cellphone, computer, and digital camera. And since the portable backup power supply comprises a LED driving circuit and a LED lamp, it is able to provide outdoor light. Therefore, the portable backup power supply of the present invention has multiple functions, is capable of providing outdoor lighting, is convenient for carrying, and is capable of providing power for different electrical instruments in living, outing, or travelling.

Detailed description according to the embodiments and the drawings is given below.
FIG.1 is a schematic block diagram of the portable backup charge in accordance with one embodiment of the invention;
FIG. 2 is a schematic circuit diagram comprising several circuit segmentations of the portable backup charge in accordance with one embodiment of the invention;
FIG. 3 is an enlarged schematic diagram of the circuit segmentation 4-1 of the portable backup charge in accordance with one embodiment of the invention;
FIG. 4 is an enlarged schematic diagram of the circuit segmentation 4-2 of the portable backup charge in accordance with one embodiment of the invention;
FIG. 5 is an enlarged schematic diagram of the circuit segmentation 4-3 of the portable backup charge in accordance with one embodiment of the invention;
FIG. 6 is an enlarged schematic diagram of the circuit segmentation 4-4 of the portable backup charge in accordance with one embodiment of the invention;

1. a battery pack; 2. a charging circuit; 3. a LED driving circuit; 4. a DC-DC 19 V-output boost circuit; 5. a 12 V output circuit; 6. a DC-DC 5 V-output buck circuit; 7. a MCU circuit; 8. a intelligent LED battery indicator; 9. a 12 V large-current output circuit; 10. a LED lamp; and 11. a charge-discharge protection circuit.

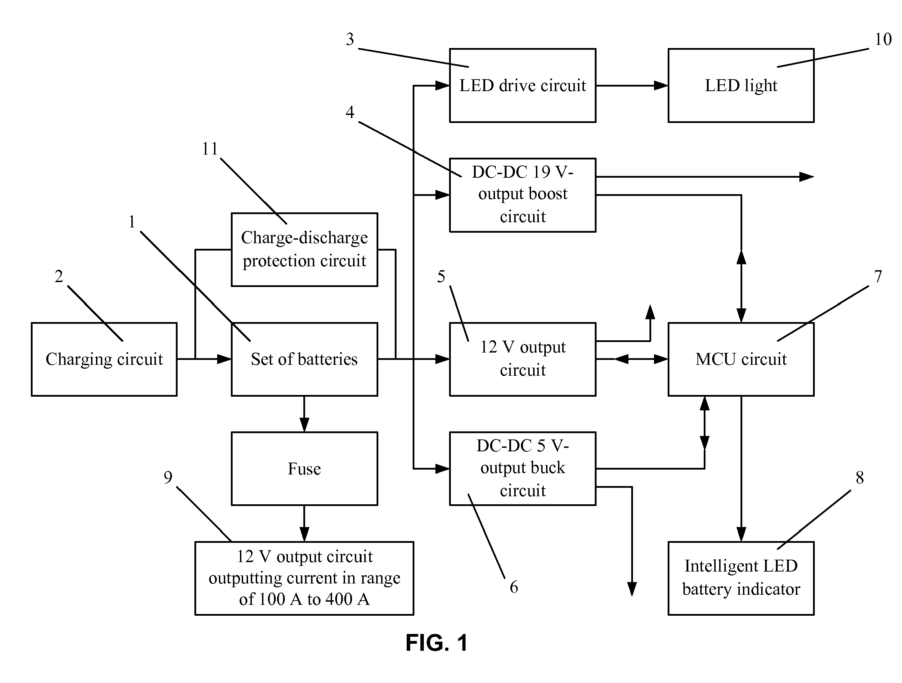

As shown in FIG. 1, the battery pack is connected to multiple DC-DC voltage regulating circuits including a DC-DC 19 V-output boost circuit 4, a 12 V output circuit 5, and a DC-DC 5 V-output buck circuit 6. Each of the multiple DC-DC voltage regulating circuits is connected to a MCU circuit 7. By controlling the MCU circuit 7, the user can flexibly choose a particular output voltage for the power supply (19 V, 12 V, or 5 V) to supply current source for a particular instrument (a cellphone, a computer, a digital camera, and etc.). Furthermore, by observing the intelligent LED battery indicator 8 which is connected to the MCU circuit 7, the power storage of the battery pack 1 is known.

Because the power supply of the present invention adopts lithium iron phosphate batteries or lithium cobalt oxide batteries to constitute an energy storage element, the power supply possesses the characteristics of light weight, small volume, durability, high instantaneous current, and high repeatability in charging. In addition, since the input of the battery pack 1 is connected to the output of a charging circuit 2, the power supply is capable of charging itself. In addition, since the battery pack 1 is connected to a 12 V large-current output circuit 9, the power supply can output a 100 - 400 A current source under a 12 V voltage and can be a start-up current source for an automobile in emergency. The 12 V large-current output circuit 9 is directly connected to the two ends of the battery pack without interference with the charging-discharging protection circuit. For the purpose of avoiding overheating the batteries by the short circuit between the positive clamp and the negative clamp or by the reverse connection in the emergent start-up process of an automobile, a 150 A - 250 A fuse is connected between the battery pack 1 and the 12 V large-current output circuit 9. The output terminals of the 12 V large-current output circuit 9 are connected to a reverse connection-proof plug, the external positive and negative connecting wires are silica-gel wires in different lengths.

For the purpose of ensuring safety in the process of charging or discharging the battery pack 1, a charge-discharge protection circuit 11 is connected to the battery pack 1 for overcurrent or overload protection.

For the purpose of supplying outdoor light, a LED driving circuit 3 and a LED lamp 10 are connected successively to the battery pack 1. Therefore, the power supply of the invention is able to be used as an outdoor light.

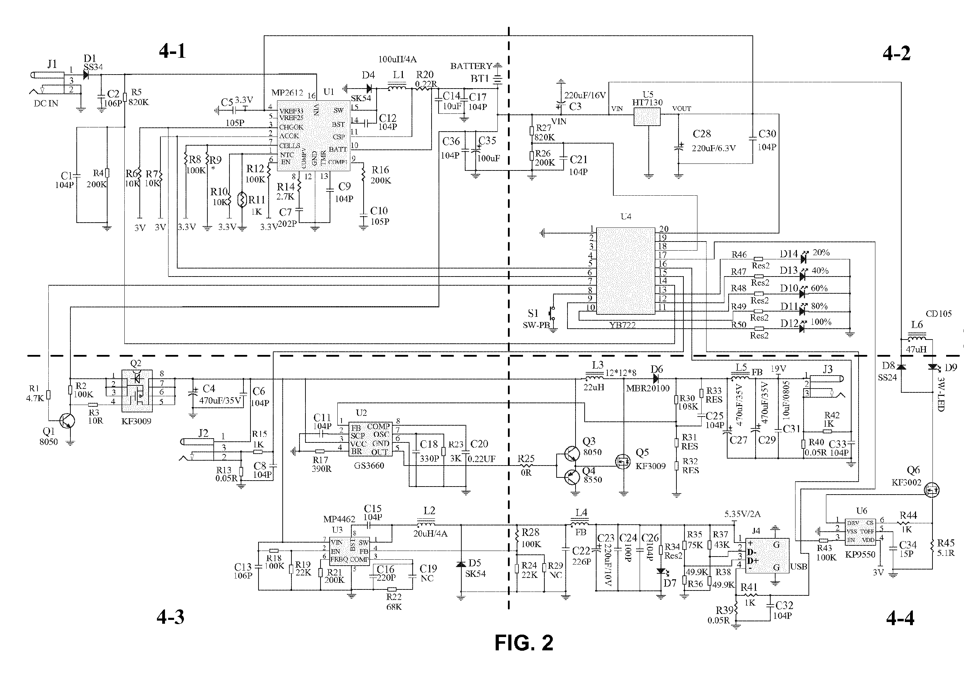

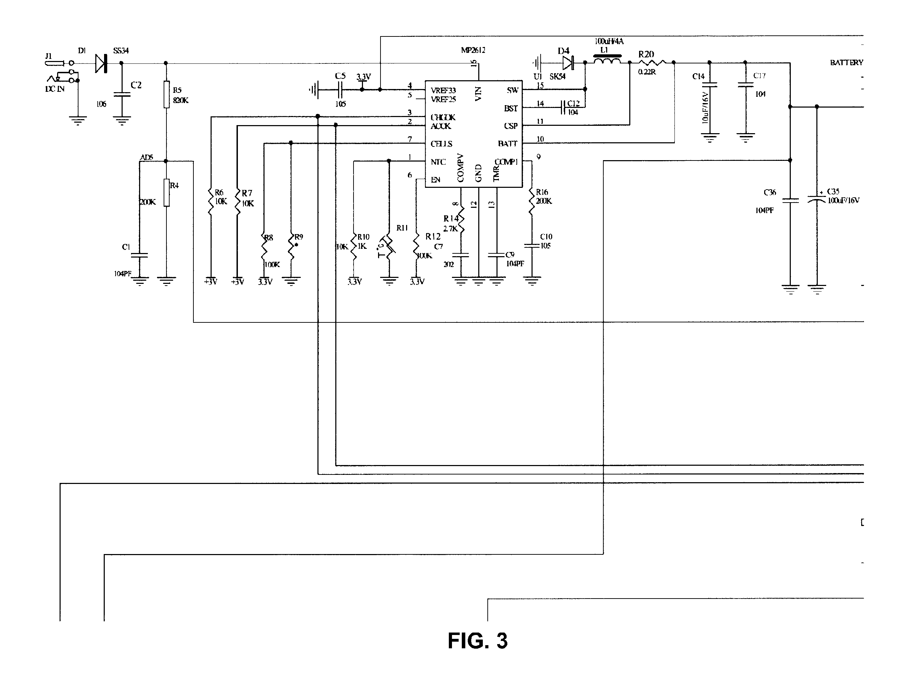

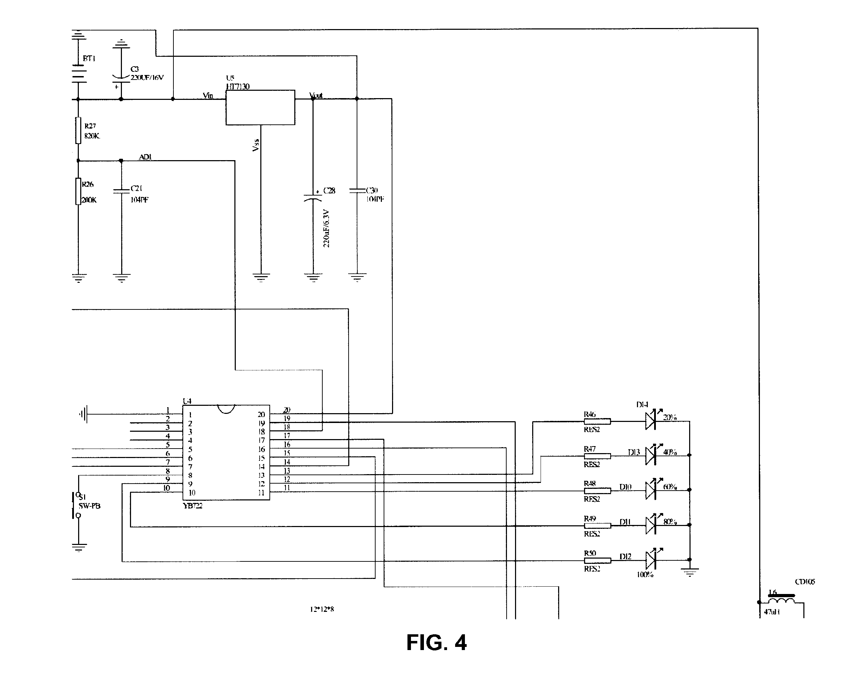

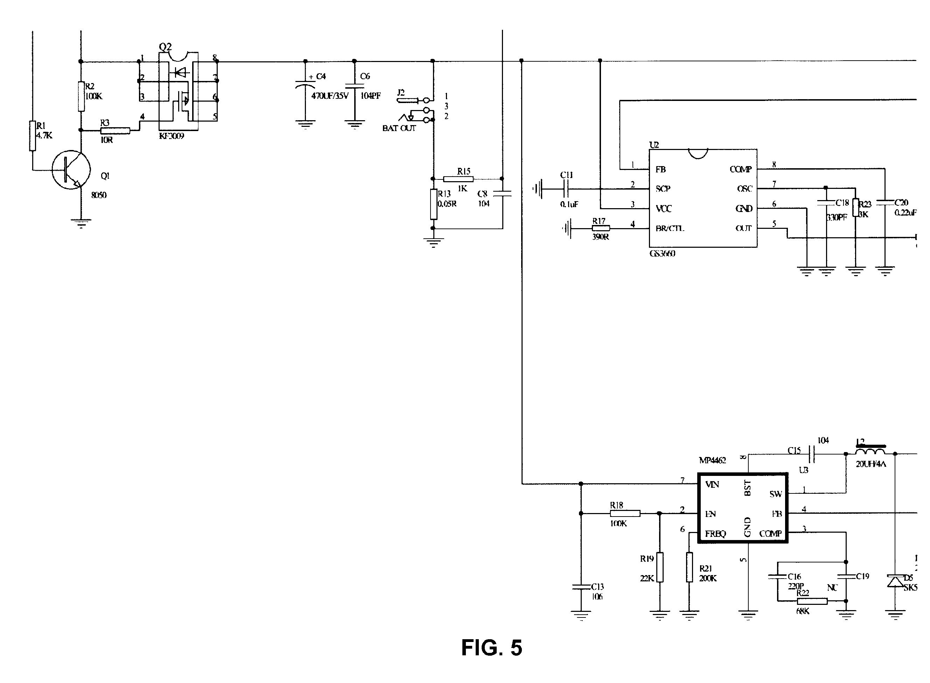

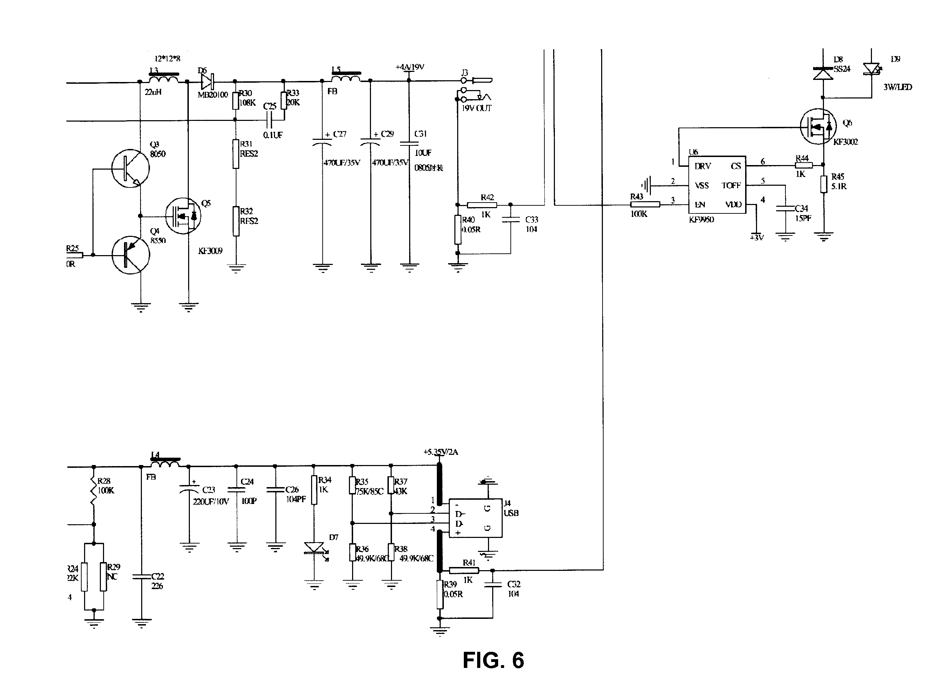

The circuits of the power supply are shown in FIGS. 2-6.

## Claims

1. A portable backup power supply, comprising:
a battery pack;
a charging circuit;
multiple DC-DC voltage regulating circuits;
a MCU circuit;
a LED driving circuit;
a LED lamp; and
a 12 V large-current output circuit;
wherein:
said battery pack is connected to the output end of said charging circuit;
said battery pack is synchronously connected with said multiple DC-DC voltage regulating circuits;
each of said multiple DC-DC voltage regulating circuits is connected with said MCU circuit;
said LED lamp is connected with said battery pack via said LED driving circuit;
said battery pack is connected with said 12 V large-current output circuit for car starting; and
said battery pack is composed of lithium iron phosphate batteries and lithium cobalt oxide batteries.

2. The power supply of claim 1, wherein said multiple DC-DC voltage regulating circuits comprise a DC-DC 19 V-output boost circuit, a 12 V output circuit, and a DC-DC 5 V-output buck circuit.

3. The power supply of claim 1, wherein said large-current output circuit outputs a 12 V DC voltage and an instantaneous 100 A - 400 A current.

4. The power supply of claim 1, wherein said battery pack is connected with a charge-discharge protection circuit.

5. The power supply of claims 1-4, wherein said MCU circuit is connected with an intelligent LED battery indicator for indicating the power storage of the battery pack.

6. The power supply of claims 1-4, wherein said large-current output circuit is connected in series with a 150 A - 250 A fuse.

7. The power supply of claims 1-4, wherein the output terminals of said large-current output circuit adopt a reverse connection-proof plug, and the external positive and negative connecting wires for the output terminals are two silica-gel wires in indifferent lengths.

8. The power supply of claims 1-4, wherein each of said lithium iron phosphate batteries or said lithium cobalt oxide batteries outputs a high power, and the charge-discharge rate for each of said lithium iron phosphate batteries or said lithium cobalt oxide batteries is 20 c - 70 c.

9. The power supply of claims 6, wherein said 150 A - 250 A fuse is connected to the external positive connecting wire or the external negative connecting wire of said large-current output circuit.
